# EUROPÄISCHE PATENTSCHRIFT

(11) **EP 0 952 429 B1**
(45) Veröffentlichungstag und Bekanntmachung des Hinweises auf die Patenterteilung: **02.03.2005**
(21) Anmeldenummer: 99107849.4
(22) Anmeldetag: 21.04.1999
(51) Int. Cl.: G01D 5/249, G01D 5/36, G01D 5/245

(54) **Optischer Winkelsensor**
Optical angle sensor
Capteur d'angles optique

(30) Priorität: 25.04.1998 DE 19818654
(43) Veröffentlichungstag der Anmeldung: 27.10.1999
(73) Patentinhaber: Hengstler GmbH, D-78550 Aldingen (DE)
(72) Erfinder: Künstler, Bernhard Dipl.-Ing., 78073 Bad Dürrheim (DE)
(74) Vertreter: Riebling, Peter, Dr.-Ing.

(56) Entgegenhaltungen:
- EP-A- 0 102 241
- EP-A- 0 575 663
- EP-A- 0 825 420
- WO-A-86/00478
- US-A- 5 444 613
- DURANA M ET AL: "NOVEL TYPE SUBMICROMETRE RESOLUTION PSEUDORANDOM POSITION OPTICAL ENCODER" ELECTRONICS LETTERS, Bd. 29, Nr. 20, 30. September 1993 (1993-09-30), Seiten 1792-1794, XP000400438 ISSN: 0013-5194

## Beschreibung

Die Erfindung geht von einem Verfahren nach dem Oberbegriff des unabhängigen Patentanspruchs 1 und einer Sensoreinheit für Gebersysteme nach dem Oberbegriff des unabhängigen Patentanspruchs 4 aus.

Hierbei ist es bekannt (EP 0557 265 B1), bei Sensoreinheiten mit Gebersystemen ein definiertes Ausgangssignal pro Umdrehung zu erzeugen; hierbei soll eine Sinusfunktion pro Umdrehung mit einer Auflösung von 360° erzeugt werden. Darüber hinaus soll auch noch eine Feininformation erzeugt werden, von z.B. 2.048 Perioden pro Umdrehung, um eine möglichst hohe Auflösung dieses Ausgangssignals zu erreichen.

Stand der Technik ist hierbei, daß eine entsprechende Codierung auf einer Drehscheibe angeordnet ist, welche z.B. im Durchlicht oder Reflektionsbetrieb arbeitet, und der entsprechende Aufnehmer zur Erfassung der Codierung, der Drehscheibe gegenüberliegend angeordnet ist.

Ein Nachteil bei den bekannten optischen Decodiersystemen ist, daß man für jedes Signal eine entsprechende Codierungsspur auf dem als Drehscheibe ausgebildeten Codierträger benötigt, was mit einem hohen Platzbedarf verbunden ist. So muß pro Bit des digitalen Ausgangssignals eine Spur ausgeführt sein, das bedeutet daß (z.B. bei 12 Bit) eine Scheibe mit 12 Spuren notwendig ist, um die Codierung zu erfassen.

Neben dem großen Platzbedarf für die Codierung auf der Scheibe, der eine entsprechende Baugröße der Sensoren erfordert, sind bei den bekannten Sensoreinheiten für Gebersysteme auch die Herstellungskosten beträchtlich, weil ja pro Spur eine entsprechende Abtasteinheit benötigt wird.

Die EP-A-0 102 241 offenbart eine Sensoreinheit zur Erfassung der Winkelpositionen einer Geberscheibe 10 mit einer einzigen Inkrementalspur, wobei eine Inkremental-Codespur und optoelektronische Einheiten angeordnet sind, und einzelne Fotoelemente 301, 302, 303 und 304 aus einer Gruppe von Fotoelementen 30 im Viertelperiodenabstand nebeneinanderliegend angeordnet sind. Die optoelektronischen Elemente 301-304 sind so ineinander verschachtelt, dass sie in der Reihenfolge A, B, A' und B' positioniert sind. Es werden digitale

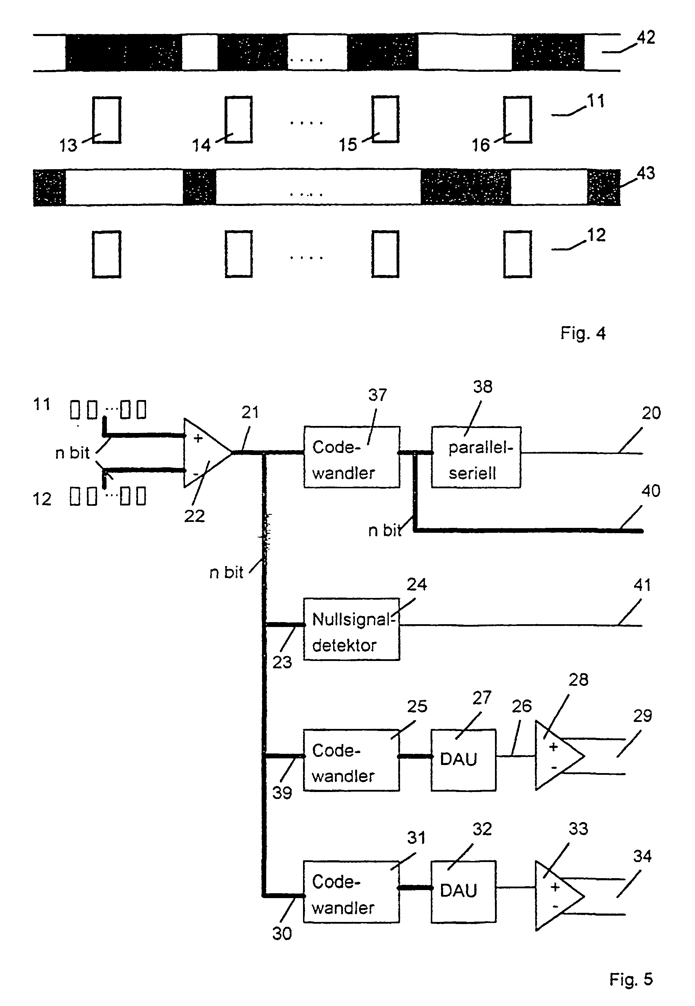

Inkrementalsignale erzeugt, die jedoch nicht Kosinus- und Sinussignale sind. Es werden vielmehr Dreiecksignale erzeugt, wie sie in Figur 5 in der obersten Darstellung angegeben sind. Nur durch entsprechendes schaltungsmäßiges Aufbereiten mit Hilfe einer Analogschaltung werden sinus-kosinus-ähnliche Signale erzeugt (wie in Figur 7 oben), die dann von einem entsprechenden Komparator wiederum in ein Rechtecksignal umgewandelt werden, wie dies in Figur 7 unten dargestellt ist. Nachteil ist, dass kein Absolutwert erzeugt werden kann.

In der EP-A-0 825 420 ist lediglich ein Absolutdrehgeber dargestellt, der nur Absolutsignale erzeugt. Demzufolge ist es nur ungenau möglich, eine aktuelle Drehposition eines Drehgebers festzustellen. Nachdem die Inkrementalspur fehlt, ist es nicht möglich, ein hochinterpoliertes Signal bezüglich der absoluten Drehlage des Drehgebers zu einem bestimmten Zeitpunkt zu erzeugen. Es wird nur pro Umdrehung ein sich über die gesamte Umdrehung erstreckendes Kosinus- oder Sinus-Signal erzeugt, was sehr schwierig auszulesen und nur ungenau weiterzuverarbeiten ist und keine große Auflösung mit sich bringt.

Die US-A-5 444 613 betrifft eine mehrspurige Codescheibe, bei der um 120° zueinander versetzte Signale pro Umdrehung erzeugt werden und diese in einem Mikrocomputer aufbereitet werden, um dann einer Digital-Analog-Wandlung zugeführt zu werden. Dieser Drehgeber hat also eine geringe Auflösung pro Umdrehung und erzeugt im Übrigen Analog-Signale, die nur schwierig weiterzuverarbeiten sind. Der Drehgeber hat gemäß Figur 6 eine 3-Bit-Auflösung, wie dies auch in Figur 7 auf der linken Seite mit den Eingangspfaden dargestellt ist.

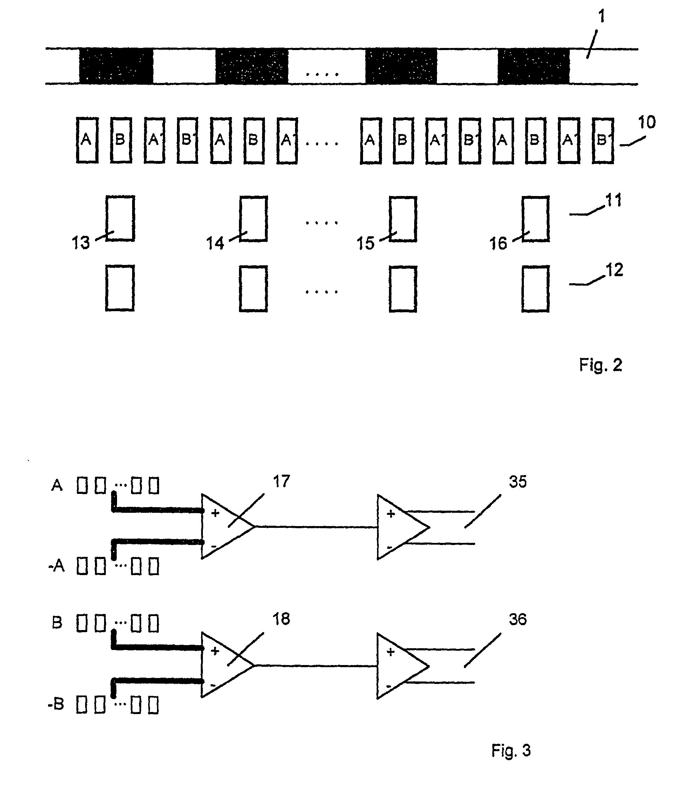

Die Druckschrift von Durana M. et al: "Novel Type Submicrometre Resolution Pseudorandom Position Optical Encoder", Electronics Letters, Bd.29; Nr. 20, 30.09.1993, Seiten 1792-1794, XP000400438, ISSN: 0013-5194 beschreibt einen im Submikrometerbereich auflösenden optischen Encoder, der als Absolutgeber wirkt. Dies ergibt sich aus Figur 2, wo erkennbar ist, dass einer Codespur eine CCD-Zeile gegenüberliegt, welche diese Codespur abtastet, wobei ein Absolutdrehwinkel erzeugt wird. Es fehlt die Erzeugung eines Drehwinkels auf Grund von Inkrementalimpulsen, welche eine wesentlich höhere Auflösung erzeugen. Daher ist es mit einem derartigen Absolutdrehgeber nicht möglich, eine hohe Auflösung (Stellungen pro Umdrehung) darzustellen.

In der EP-A-0 575 663 ist ein Inkrementalzähler dargestellt, der mit zwei zueinander phasenverschobenen Codespuren arbeitet und bei der Auswertung dieser beiden zueinander phasenverschobenen Codespuren ein inkrementales Signal erzeugt. Die Spuren A und B sind Inkrementalspuren, während die Spur C eine Absolutspur ist. Die Absolutspur wird jedoch nur seriell abgetastet. Es muss einmal die Sequenz Start-Stopp überfahren werden, damit ein komplettes Absolutwort identifiziert wird und damit bekannt ist, in welcher Periode der Inkrementalspur man sich befindet. Nachteil dieser Anordnung ist, dass der Drehgeber in seinem absoluten Positionsteil nicht in der Lage ist, einen Sinus- und/oder Kosinus pro Umdrehung des Drehgebers zu erzeugen und ebenso wenig ein Nullsignal. Damit ist nur eine geringe Auflösung möglich, weil die Signale A, B der einzelnen Inkrementatspuren nicht weiter aufgelöst werden. Hier ist nur die Aufgabe gestellt, eine Relation zwischen der Inkrementalspur und der Absolutspur herzustellen. Dies geschieht über eine physikalische Offsetverrechnung, wie es in der einzigen Zeichnung dieser Druckschrift im mittleren, unteren Teil dargestellt ist. Gemäß der rechten Darstellung im Kästchen 13 wird der Absolutwert nur für eine Plausibilitätsprüfung im Kästchen 14 verwendet, um den Ort der Inkrementalposition festzustellen. Dies reicht jedoch nicht für einen Drehgeber hoher Auflösung nach der Erfindung aus. Hieraus ergibt sich eine geringe Auflösung, weil das Absolutdrehgebersignal nur für eine Plausibilitätsprüfung verwendet wird, und nicht für eine eindeutige Zuordnung eines bestimmten Inkrementalsignals auf dem Umfangswinkel des Drehgebers. Wegen der durchgeführten Plausibilitätsprüfung wird mit der Auslesung der Absolutspur nur gesagt und gewährleistet, dass sich der Drehgeber in einem bestimmten Winkelbereich von z. B. 30-90° befindet. Eine feinere Aussage bezüglich der Absolutdrehposition kann hierbei nicht getroffen werden. Es soll also nur ein Versagungsmechanismus durch Auslesen der absoluten Drehgeberspur erzeugt werden. Das bedeutet, dass nur erkannt werden soll, dass der Motor mit dem daran angeschlossenen Drehgeber z. B. nicht in unzulässig hohe Drehzahlen hochdreht oder gar durchgeht. Dies hat nichts mit einer Positionsbestimmung und mit einer Verbesserung der Auflösung zu tun.

Die WO 86 00478 A zeigt ebenfalls eine Kombination einer Inkrementalmessung mit einer Absolutwertmessung, um eine Sensoreinheit für eine Positionsbestimmung mit geringem Platzbedarf zu erzielen. Hierbei ist für die Inkrementalmessung, als auch für die Absolutwertmessung lediglich eine Codespur auf einer sich drehenden Codierscheibe angeordnet, die radial voneinander beabstandet sind, und die von je einem einzigen Sensor abgetastet werden. Die Inkrementalwerte und die Absolutwerte werden hierbei zunächst gemessen, in einem temporären Speicher gespeichert, mit dem nächsten Wert verglichen und anschließend kombiniert in eine Positionsinformation gewandelt. Nachteil ist, dass pro Codespur (inkremental oder absolut) nur eine Sensoreinheit vorhanden ist, was zu einer eingeschränkten Auflösung führt. Ein Hinweis auf mehrere Sensoreinheiten pro Codespur und innerhalb einer Periodenlänge des Signals, ebenso wie das dortige Messen von invertierten Signalen ist hier nicht zu entnehmen.

Der Erfindung liegt ausgehend von der EP-A-0 575 663 deshalb die Aufgabe zugrunde, eine Sensoreinheit der eingangs genannten Art so weiterzubilden, daß sie bei wesentlich geringerem Platzbedarf eine mindestens gleich große, oder sogar eine noch bessere Auflösung als die der bekannten Systeme erreicht, wobei neben der gegebenen technischen Lehre zusätzlich geringere Herstellungskosten anfallen.

Die Lösung der gestellten Aufgabe erfolgt durch die technische Lehre der Ansprüche 1 und 4.

Das Verfahren zur Erfassung von Winkelpositionen einer Geberscheibe ist hierbei in Anspruch 1 angegeben und die Sensoreinheit für Gebersysteme zur Erfassung von Winkelpositionen einer Geberscheibe ist in Anspruch 4 angegeben.

Dabei findet auf einer ersten Spur eine sogenannte Inkremental-Abtastung mit hoher Auflösung statt, um den radialen Platzbedarf zu minimieren, wobei z.B. 2.048 Perioden pro Umdrehung erfaßt werden. Dabei ist wesentlich, daß bei dieser Inkremental-Abtastung die der Code-Spur auf der Drehscheibe zugeordneten Meßwertaufnehmer, die als Fotodiodenarray aufgebaut sind, auf einer einzigen Spur angeordnet und so ineinander verschachtelt sind, daß diese Einzeldioden mit einem Mittenabstand von ¼ der Periodenlänge der Codierung in der Reihenfolge A, B,A' und B' positioniert sind, wobei sich diese Anordnung mehrfach wiederholen kann.

Mit dieser gegebenen technischen Lehre ergibt sich also der Vorteil, daß, bei derartig aufgebauten Sensoreinheiten für Gebersysteme, die Abtastung einer einzigen Codespur voneinander abhängige und miteinander verschachtelte Signale im Fotodiodenarray erzeugt werden, die zueinander phasenverschoben sind. Durch die Verschachtelung dieser Signale ist es möglich die Sensoreinheiten für Gebersysteme so zu gestalten, daß die Abtastung einer einzigen Spur ausreicht um den gleichen Informationsgehalt, der bisher auf mehrere Spuren verteilt werden mußte, zu ermitteln. Dies bedeutet einen wesentlich geringerem Platzaufwand, der sich positiv auf die Baugröße der Sensoreinheiten für Gebersysteme auswirkt.

Die Sensoreinheit besteht also aus einem Inkrementalteil der analoge oder digitale Ausgangssignale mit hoher Auflösung (z.B.2048 Perioden pro Umdrehung) liefert. Die Abtastdioden für die Signale A, A', B und B' sind also ineinander verschachtelt auf dem selben Radius angeordnet, sodaß der radiale Platzbedarf minimiert ist. Wird diese Anordnung der Abtastdioden mehrere male auf dem Umfang angeordnet, so erhält man durch die Addition der Einzelsignale zu einem Summensignal einen größeren Signalpegel, der einen höheren Signal- Rauschabstand sicherstellt. Um den Einfluß von Gleichanteilen zu minimieren folgt eine Differenzbildung der nichtinvertierenden und der invertierenden Signale (A, A'und B, B'). Um die Übertragung über längere Kabel störungsfrei sicherzustellen, folgt ein Leitungstreiber der Differenzsignale am Ausgang liefert.

Die absolute Information erhält man demnach durch abtasten eines speziellen seriellen Codes. Die Abtastdioden liegen alle auf dem selben Radius, sodaß hier der radiale Platzbedarf minimiert ist. Die Differentialabtastung findet hier Anwendung. Der spezielle Absolutcode wird über einen Codewandler in einen üblichen Dualcode (z.B. Binärcode oder Graycode) gewandelt, und steht parallel zur Verfügung, und steht nach einer parallel/seriell- Wandlung an einer Seriellen Schnittstelle z.B. SSI zur Verfügung.

In einer weiteren Ausführung wird ein Nullsignaldetektor eingesetzt, der vergleicht den internen Code mit einem abgelegten Bitmuster und gibt bei Übereinstimmung der beiden ein Signal aus, das dem Nullsignal beim Standardinkrementalgeber entspricht.

Darüberhinaus wird über einen weiteren Codewandler und einer anschließenden Digital/Analog Umsetzung (DAU) ein Sinussignal generiert, das über einen Leistungstreiber als Differenzsignal ausgegeben wird. Entsprechendes wird für das Cosinussignal mit einem weiteren Codewandler durchgeführt. Im Unterschied zu den hochauflösenden Analogsignalen der Spuren A und B steht hier ein Sinus/Cosinus-Signalpaar mit wenigen Perioden pro Umdrehung zur Verfügung. Daraus kann über die Arcustangensfunktion auf Anwenderseite der absolute Positionswert bestimmt werden.

Es ergibt sich durch diesen Aufbau ein sehr geringer Platzbedarf für die Photodioden. Die benötigte Chipfläche für den ASIC sinkt auf ca. 1/3 der bisher benötigten Fläche bei der Verwendung der bekannten Technik.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile hervor.

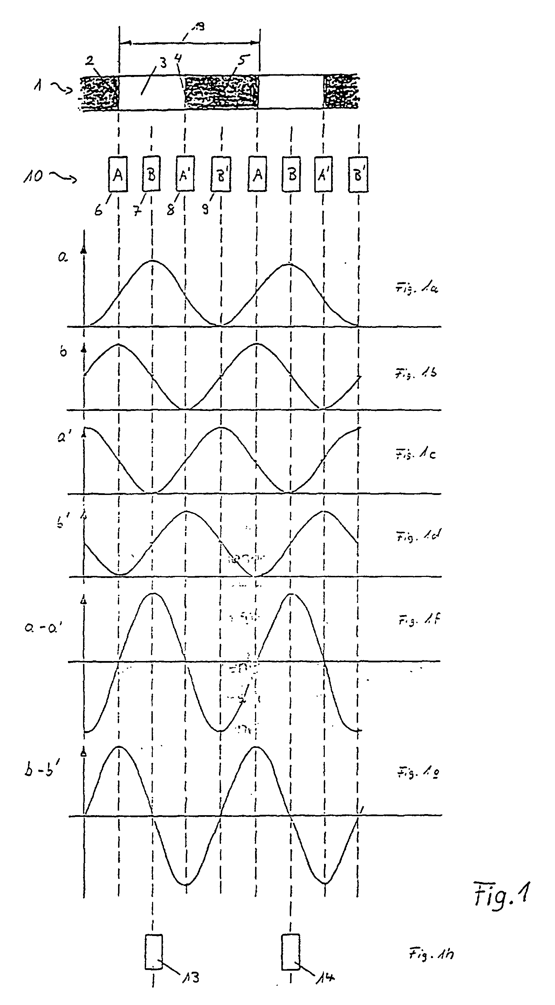

Die Figur 1 zeigt eine schematische Darstellung einer Codespur auf der Codescheibe mit der dazugehörigen Fotodiodenspur 10.

Es zeigen die Figuren 1a bis 1d die Signale der Fotodioden A,B,A',B' die sich bei einer Drehbewegung der Codescheibe ergeben.

Es zeigt die Figur 1f das Differenzsignal der Fotodioden A -A' bei einer Drehbewegung der Codescheibe.

Es zeigt die Figur 1g das Differenzsignal der Fotodioden B -B' bei einer Drehbewegung der Codescheibe.

Es zeigt die Figur 1h die Positionierung der Fotodioden 13 und 14 der Diodenspuren 11.

Es zeigt die Figur 2 die Fotodiodenspur 10 für die Abtastung der Inkrementalspur, und die Fotodiodenspuren 11 und 12 für die Abtastung der seriellen Absolutspur.

Es zeigt die Figur 3 ein Blockdiagramm für die Inkrementalauswertung.

Es zeigt die Figur 4 die Absolutcodespuren 42 und 43 mit den Diodenspuren 11 und 12.

Es zeigt die Figur 5 ein Blockdiagramm für die Absolutauswertung.

In der Figur 1 ist, beginnend bei Ziffer 1, ein Ausschnitt aus einer Codespur dargestellt, die auf einem konzentrischen Kreis einer Drehscheibe gleichmässig verteilt angeordnet ist.

Darunter ist mit dem Bezugszeichen 10 eine Fotodiodenspur schematisch dargestellt, welche aus einem einzeiligen Fotodiodenarray besteht. Die Fotodioden im Fotoarray sind so angeordnet, daß sie die auf der Drehscheibe auf einem konzentrischen Kreis gleichmässig verteilt angeordnete Codespur erfassen können. Die Informationen von der Codespur können dabei im Durchlicht- oder im Reflektionsverfahren gewonnen werden.

Um den Anteil von Rausch- und Störsignalen zu minimieren bzw. zu eliminieren können mehrere Fotoarrays in entsprechenden Abständen zur Erfassung der Codierung angeordnet sein. Dabei werden die Signale der korrespondierenden Fotodioden zusammengeschalten, um eine präzisere Auswertung zu ermöglichen.

Die Figuren 1a bis 1f zeigen die entsprechenden Signale, die sich bei der Drehbewegung der Drehscheibe ergeben.

Die Figur 1a zeigt ein Summensignal aller miteinander verbundenen Fotodioden A, mit der sich hierdurch ergebenden relativ hohen Amplitude, deren Scheitelwert sich weit über dem Scheitelwert einer einzelnen Fotodiode abhebt, so daß ein relativ störungsfreies Summensignal erreicht wird. Gleiches gilt für die Darstellung in Figur 1b. Hier ist das Summensignal der Fotodioden B dargestellt, das durch Zusammenschaltung aller Fotodioden B erreicht wird.

Die Figuren 1c und 1d zeigen, daß auch die invertierten Signale der Fotodioden A' und B' aufsummiert werden, so daß insgesamt relativ hochpegelige Signalausgänge erzeugt werden.

In den Figuren 1f und 1g ist dargestellt, daß durch Subtraktion der Signalpegel a und a' und der Signalpegel b und b' die Gleichanteile dieser Summensignale eliminiert werden, wobei die beiden Signalpegel um 90° zueinander verschoben sind.

Anhand der Figur 1 ist eine Periode 19 dargestellt, die insgesamt 2.048 mal beim gezeigten Ausführungsbeispiel auf der ersten Spur auftritt, wenn die Drehscheibe um 360° gedreht wird.

In der vorliegenden Erfindung ist es vorgesehen, daß die absolute Information der Drehlage durch die Abtastung eines speziellen, seriellen Codes erfolgt.

Hier sieht die Erfindung vor, daß neben der Inkrementalabtastung auf der ersten Spur der Geberscheibe, ein spezieller serieller Code auf einer weiteren Spur auf einem konzentrischen Kreis erzeugt wird. Dieser serielle Code wird von der Fotodiodenspur 11 erfasst, die so angeordnet ist, daß sie die zusätzliche Codespur erfassen kann.

Diese Fotodiodenspur enthält z.B. 11 Fotodioden die einen 11 Bit langen Code erzeugt. Auf der Fotodiodenspur 11 sind also insgesamt 11 Fotodioden mit den Bezugszeichen 13-16 angeordnet, wobei der Einfachheit halber lediglich 4, die zwei ersten und die zwei letzten der gesamten Spur, zeichnerisch dargestellt sind.

Wichtig ist nun, daß pro Periode 19 eine derartige Absolutwertabtastung stattfindet. Damit ist gewährleistet, daß pro Periode der Inkrementalspur genau 1 Codewort durch die Fotodioden 13,14 ... 16 erzeugt wird.

Wenn man nun die Signale von 11 nebeneinander liegenden Fotodioden betrachtet, von denen lediglich 2 -die Fotodioden 13 und 14- in Figur 1h dargestellt sind, dann ergibt sich hieraus ein 11 Bit breiter Code, der für den absoluten Drehwinkel dieses Drehgebers eine eindeutige Aussage trifft. Wenn also der Drehgeber um 360° verdreht wird, durchläuft das 11 Bit breite Wort der Absolutwertabtastung den Wertebereich von 2¹¹ unterschiedlichen digitalen Worten.

Auf diese Weise ist sichergestellt, daß jedem inkrementalen Drehwinkel von -360° geteilt durch 2¹¹- ein entsprechends digitales Wort der Absolutwertabtastung

zugeordnet ist. In einer Weiterbildung der vorliegenden Erfindung ist vorgesehen, daß noch eine zusätzliche Spur der Absolutwertabtastung (nämlich die Fotodiodenspur 12) angeordnet wird, bei der eine invertierte Absolutwertabtastung vorgenommen wird, so daß die positiv- und negativ sich ergebenden Werte der beiden Fotodiodenspuren 11,12 zueinander addiert werden können, und hierdurch der Gleitanteil eliminiert wird.

Wichtig bei der vorliegenden Erfindung ist, daß es nicht lösungsnotwendig ist, daß die Absolutwertabtastung in Form eines 11 Bit breiten Wortes erfolgt. Es können selbstverständlich auch mehr oder weniger Fotodioden der Fotodiodenspur 11 bzw. 12 zusammengeschaltet werden, um ein mehr oder weniger Bit breites Codewort zu erzeugen. Darüberhinaus kann die absolute Information auch auf mehrere Codespuren verteilt angeordnet sein.

Die Figur 3 zeigt ein Blockdiagramm für die vorher bereits schon anhand der Figuren 1a bis 1f dargestellte und erläuterte Aufaddierung der Inkrementalsignale, anhand dessen erkennbar ist, daß das Signal A mit dem Signal A' jeweils am positiven und negativen Eingang eines Addierers anliegen, der hieraus ein Differenzsignal bildet, welches einem Leistungstreiber zugeführt wird. Dieser Leistungstreiber erzeugt zur Signalübertragung Differenzsignale von 2.048 mal der vorher beschriebenen Sinuskurve gemäss der Figur 1f. Dabei wird in der Darstellung mit den Bezügen A und A' der Sinusanteil der Kurve ausgewertet, und in der Darstellung mit den Bezügen B und B' der Cosinusanteil der Kurve.

In Figur 5 ist die Aufbereitung der Absolutwertabtastung dargestellt.Das Absolutwertsignal der Fotodiodenspur 11 wird an dem positiven Eingang des Addierers angelegt, und das Fotodiodensignal der Fotodiodenspur 12 wird an den negativen Eingang des Addierers angelegt. Der Addierer verarbeitet die beiden Eingangswerte so, daß ein Signal entsteht, das von Anteilen die den gleichem Betrag aufweisen befreit ist. Dieses 11 Bit breite Codewort wird nun dem Codewandler 37 zugeführt, der einen üblichen Dualcode, z.B. einen Binärcode oder einen Graycoce daraus erzeugt.

Das erzeugte Signal steht am Ausgang 40 parallel zur Verfügung oder kann über einen parallel/seriell Wandler 38 geführt werden, so daß an dessen Ausgang 20 ein serielles Signal ausgegeben wird.

Nachfolgend wird die sogenannte Nullsignalerkennung erläutert, wobei erkennbar ist, daß am Ausgang 21 des Addierers 22 über einen weiteren Zweig 23 ein Nullsignal-Detektor 24 angeordnet ist. Der Nullsignal-Detektor 24 vergleicht den am Eingang im Zweig 23 anliegenden Parallelcode mit einem darin abgespeicherten Muster, und wenn eine Übereinstimmung festgestellt wird, wird am Ausgang 41 ein Nullsignal erzeugt. Damit ist eine Referenz für eine Vollumdrehung des Drehgebers gegeben, wenn dieser z.B. um eine Vollumdrehung von 360° gedreht wurde, wird jeweils pro Umdrehung am Ausgang 41 ein Nullsignal erzeugt. Mit diesem Nullsignal kann z.B. auch ein Startsignal für einen neuen Programmablauf einer davon gesteuerten Werkzeugmaschine gebildet werden.

Das von dem Addierer 22 erzeugte und am Ausgang 21 in Parallelform anliegende digitale Wort wird gleichzeitig über den Zweig 39 einem Codewandler 25 zugeführt. Dieser Codewandler generiert eine digitale Codefolge. Der Codewandler 25 wandelt den anliegenden Code so um, daß am Ausgang 26 des Digital-Analog-Wandlers 27 ein Sinussignal entsteht, welches über einen Leistungstreiber 28 auf die Leitung 29 ausgegeben wird.

In gleicher Weise wandelt der Codewandler 31 das im Zweig 30 anliegende digitale Wort so um, daß in dem nachgeschalteten Digital-Analogwandler 32 ein Cosinussignal erzeugt wird, welches über den Leistungstreiber 33 dem Ausgang 34 zugeführt wird. Insgesamt sind also nun 7 Ausgänge vorhanden, wobei die Ausgänge 35,36 das jeweilige inkrementelle Signal beinhalten, während am Ausgang 20 das absolute, serielle Signal vorhanden ist, am Ausgang 40 absolute, parallele Signal und am Ausgang 41 das Nullsignal.

An den Ausgängen 29,34 wird pro Umdrehung der codierten Drehscheibe ein Sinussginal bzw. ein Cosinussignal erzeugt.

Die Codewandler 25 und 31 können so programmiert werden, daß auch das Signal die Formgebung k x Sinus bzw. k x Cosinus haben kann, dies heißt, daß es auch möglich ist, pro Vollumdrehung zwei, drei oder auch mehr Sinus- bzw. Cosinusfunktionen zu erzeugen.

Man kann über die Codewandler 25 bzw. 31 die Ausgänge 29,34 so programmieren, daß entsprechende Rechtecksignale ausgegeben werden, um direkt mit diesen Rechtecksignalen einen entsprechenden Motor anzusteuern. Diese Rechtecksignale sind also die Kommutierungssignale (Schrittsignale) für einen entsprechend angesteuerten Motor.

Damit ergibt sich auch der Vorteil, daß der hier dargestellte Drehgeber einer Standardschnittstelle entspricht, die jeweils nieder und hochauflösende Analogsignale verarbeitet.

Weiters ist durch universelle Auflösung der Codewandlung eine Anpassung der Kommutierungssignale an unterschiedliche Motoren durch Software möglich.

Ebenso steht der absolute Positionswert als digitaler Wert zur Verfügung, so wie dies anhand der Ausgänge 20 und 40 erläutert wurde.

Die Standardschnittstellen benötigen also die Signale der Ausgänge 35,36,29,34 und 41 während Nicht-Standardschnittstellen beispielsweise dann zusätzlich noch mit den Signalen der Ausgänge 20 und 40 arbeiten können. Der Vorteil dieser Maßnahme ist, daß beispielsweise am Signalausgang 20 bereits schon der absolute Positionswert zur Verfügung steht, der - bei den Standardschnittstellen - aus den Ausgangssignalen der Ausgänge 35,36,29,34 erst errechnet werden muss.

Wichtig ist also die Codewandlung nach Figur 5, bei der mit dem Codewandler 37 aus dem parallel anliegenden Codewort ein Standard-Codewort generiert wird.

Dank der weiter verwendeten Codewandler 25,31 ist es demzufolge ebenfalls möglich, die üblichen Standardschnittstellen zu bedienen. Mit der Erfindung ergibt sich also der Vorteil, daß mit dem hier dargestellten Geber sowohl Standardschnittstellen angesteuert werden können, als auch neuartige Signalzusammenstellungen erzeugt werden, die in einfacher Weise weiterverarbeitet werden können.

Es ergibt sich also ein wesentlich minimierter Platzbedarf, weil die genannten elektrischen Schaltungsteile in Verbindung mit der neuartigen Codescheibe eine wesentlich geringere Baugröße aufweisen, als die herkömmlich bekannten Drehgeber.

### Zeichnungslegende

- 1: Codespur inkremental
- 2: Sprung
- 3: Signalpegel hoch
- 4: Sprung
- 5: Signalpegel niedrig
- 6: Fotodiode A
- 7: Fotodiode B
- 8: Fotodiode A'
- 9: Fotodiode B'
- 10: Fotodiodenspur ink.
- 11: Fotodiodenspur absolut
- 12: Fotodiodenspur absolut
- 13: Fotodiode
- 14: Fotodiode
- 15: Fotodiode
- 16: Fotodiode
- 17: Addierer
- 18: Addierer
- 19: Periode
- 20: Ausgang
- 21: Ausgang
- 22: Addierer
- 23: Zweig
- 24: Nullsignaldedektor
- 25: Codewandler
- 26: Ausgang D/A WAndler
- 27: DAU
- 28: Leistungstreiber
- 29: Ausgang
- 30: Zweig
- 31: Codewandler
- 32: DAU
- 33: Leistungstreiber
- 34: Ausgang
- 35: Ausgang ink
- 36: Ausgang ink
- 37: Codewandler
- 38: Parallel/Seriell Wandler
- 39: Zweig
- 40: Ausgang parallel absolut
- 41: Ausgang seriell absolut
- 42: Codespur
- 43: Codespur

## Patentansprüche

1. Verfahren zur Erfassung von Winkelpositionen einer Geberscheibe, mit Inkrementalteilung und absolut codierter Meßteilung, zur Bestimmung der Absolutposition der Geberscheibe, im Durchlicht- oder Reflexionsbetrieb, wobei mindestens eine optoelektronische Ableseeinrichtung als Zeilendetektor ausgeführt ist, die mindestens einer Codespur der Geberscheibe gegenuberliegt, und an der eine Auswerteeinheit angeordnet ist, die die Momentanposition der Geberscheibe aus den Abtastsignalen ermittelt, **dadurch gekennzeichnet, daß** mindestens über einer Codespur (42, 43) eine Absolutwertabtastung hoher Auflösung mit mindestens 2048 Codewörter pro 360°-Umdrehung der Geberscheibe stattfindet, wobei die Absolutposition der Geberscheibe durch die Auswerteeinheit ermittelt wird, an die die Signale der Absolutwertabtastung zugeführt werden und daß die Auswertung der Signale der Absolutwertabtastung in der Weise erfolgt, daß die Signale der Absolutwertabtastung einem Addierer (22) zugeführt werden, und daß ein Codewandler (25) zusammen mit einem Digital-Analog-Wandler (27) das Codesignal, das vom Addierer (22) kommt, in ein Sinussignal umwandelt, das an einem Ausgang (29) anliegt, und daß ein weiterer Codewandler (31) zusammen mit dem Digital-Analog-Wandler (32) das Codesignal das vom Addierer (22) kommt, in ein Cosinussignal umwandelt, das an einem Ausgang (34) anliegt und daß auf einer einzigen Codespur (1) eine Inkrementalabtastung hoher Auflösung mit mindestens 2048 Perioden pro 360°-Umdrehung der Geberscheibe stattfindet, wobei mindestens ein dieser Auflösung zugeordnetes Zeilendetektor-Array (10) von optoelektronischen Messwertaufnehmem (6-9) mit einem Mittenabstand von ¼ Periodenlänge (19) diese Codespur (1) abtastet, wobei ein erster optoelektronischer Messwertaufnehmer das Signal a, ein zweiter optoelektronischer Messwertaufnehmer das Signal b, ein dritter optoelektronischer Messwertaufnehmer das invertierte Signal a', und ein vierter optoelektronischer Messwertaufnehmer das invertierte Signal b' liefert, wobei aus den Sinus- und Cosinussignalen, sowie der Inkrementalabtastung der Codespur (1) und dem Nullsignal als Referenz für eine Vollumdrehung die Absolutposition der Geberscheibe bestimmt wird.

2. Verfahren nach Anspruch 1, **dadurch gekennzeichnet, daß** die Codewandler (25, 31) so programmiert sind, daß die Signale (29, 34) in der Form K x Sinus und K x Cosinus pro Vollumdrehung der Codescheibe entsprechen, wobei K eine ganzzahlige Zahl ist.

3. Verfahren nach einem der Ansprüche 1 oder 2, **dadurch gekennzeichnet, daß** die Codewandler (25, 31) so programmiert sind, daß an den Ausgängen (29, 34) pro Scheibenumdrehung k Rechtecksignale mit einer vorgegebenen Phasenverschiebung ausgegeben werden.

4. Sensoreinheit für Gebersysteme zur Erfassung von Winkelpositionen einer Geberscheibe, mit Inkrementalteilung und absolut codierter Meßteilung, zur Bestimmung der Absolutposition der Geberscheibe, im Durchlicht- oder Reflexionsbetrieb, wobei mindestens eine optoelektronische Ableseeinrichtung als Zeilendetektor ausgeführt ist, die mindestens einer Codespur der Geberscheibe, gegenüberliegt, und an der eine Auswerteeinheit angeordnet ist, die die Momentanposition der Geberscheibe aus den Abtastsignalen ermittelt, **dadurch gekennzeichnet, daß** mindestens über einer Codespur (42, 43) Mittel zur Absolutwertabtastung hoher Auflösung mit mindestens 2048 Perioden pro 360°-Umdrehung der Geberscheibe angeordnet sind, und der Absolutwertabtastung ein Addierer (22) nachgeschaltet ist, dem ein erster Codewandler (25) mit Digital- Sinus-Analog-Wandler (27) nachgeschaltet ist und parallel dazu ein weiterer Codewandler (31) mit Digital-Cosinus-Analog-Wandler (32), deren Ausgänge (29, 34) mit einer Absolutwertauswerte-Einheit verbunden sind, und daß auf einer einzigen Codespur (1) Mittel zur Inkrementalabtastung hoher Auflösung mit mindestens 2048 Perioden pro 360°-Umdrehung der Geberscheibe vorgesehen sind, wobei mindestens ein dieser Auflösung zugeordnetes Zeilendetektor-Array (10) von optoelektronischen Meßwertaufnehmern (6-9) mit einem Mittenabstand von ¼ Periodenlänge (19) diese Codespur (1) abtastet, wobei ein erster optoelektronischer Messwertaufnehmer das Signal a, ein zweiter optoelektronischer Messwertaufnehmer das Signal b, ein dritter optoelektronischer Messwertaufnehmer das invertierte Signal a', und ein vierter optoelektronischer Messwertaufnehmer das invertierte Signal b' liefert, wobei die Auswerteeinheit dazu geeignet ist, aus den Sinus- uns Cosinussignalen, sowie der Inkrementalabtastung der Codespur (1) und dem Nullsignal als Referenz für eine Vollumdrehung die Absolutposition der Geberscheibe zu bestimmen.

5. Sensoreinheit für Gebersysteme nach Anspruch 4, **dadurch gekennzeichnet, daß** alle gleichnamigen optoelektronischen Einheiten A, B, A, B', ausgebildet als Fotodioden (6,7,8,9), eines Meßwertaufnehmers miteinander verbunden sind, um ein störungsfreies Summensignal zu erzeugen.

6. Sensoreinheit für Gebersysteme nach einem der Ansprüche 4 oder 5, **dadurch gekennzeichnet, daß** bei Abtastung einer einzigen Codespur (1) voneinander abhängige und miteinander verschachtelte Signale im Zeilendetektorarray erzeugt werden, die zueinander phasenverschoben sind.

7. Sensoreinheit für Gebersysteme nach einem der Ansprüche 5 und 6, **dadurch gekennzeichnet, daß** durch Zusammenschaften der Signale (a, a') aus den Fotodioden (6,8) und den Fotodioden (7,9) mit den Signalen (b, b') die Gleichanteile der Summensignale eliminiert werden.

8. Sensoreinheit für Gebersysteme nach einem der Ansprüche 5 - 8, **dadurch gekennzeichnet, daß** die Ermittlung der absoluten Information der Drehlage der Geberscheibe durch Abtasten eines speziellen seriellen 11 Bit langen Codes über die Fotodiodenspur (11) mit den Fotodioden (13-16) erfolgt, wobei die Fotodiodenspur (11) einen 11 Bit langen Code erzeugt um die auf der Inkrementalspur angeordneten 2.048 Perioden (19) darstellen zu können.

9. Sensoreinheit für Gebersysteme nach einem der Ansprüche 5- 9, **dadurch gekennzeichnet, daß** pro Periode (19) genau ein absolutes Codewort von Fotodioden (13, 14,...,16) erzeugt wird.

10. Sensoreinheit für Gebersysteme nach einem der Ansprüche 4 - 9, **dadurch gekennzeichnet, daß** eine zusätzliche Fotodiodenspur (12) angeordnet ist, bei der eine invertierte Absolutwertabtastung gegenüber der Fotodiodenspur (11) vorgenommen wird.

11. Sensoreinheit für Gebersysteme nach einem der Ansprüche 5 - 11, **dadurch gekennzeichnet, daß** die Auswerteeinheit einen Addierer (17) und einen weiteren Addierer (18) enthält, die jeweils die Signale a und a' sowie die Signale b und b' addieren, und die so entstehenden Signale anschließend jeweils einem Leistungstreiber zugeführt werden.

12. Sensoreinheit für Gebersysteme nach einem der Ansprüche 5 - 12, **dadurch gekennzeichnet, daß** die Nullsignalerkennung mit dem Nullsignaldetektor (24) in der Weise erfolgt, daß der am Eingang des Nullsignaldetektors (24) anliegende Code mit einem im Nullsignaldetektor (24) abgelegten Code verglichen wird, und bei Übereinstimmung ein Nullsignal am seinem Ausgang erzeugt wird, das bedingt durch die Codierung einmal pro Umdrehung der Geberscheibe auftritt.

13. Sensoreinheit für Gebersysteme nach einem der Ansprüche 5 - 13, **dadurch gekennzeichnet, daß** nach dem Codewandler (37) ein üblicher Dualcode am Ausgang (40) parallel, oder nach einer parallel/seriell-Wandlung seriell zur Verfügung steht.

## Claims

1. Method for detecting angular positions of a transducer plate, with an incremental scale and an absolutely coded measuring scale, for determining the absolute position of the transducer plate, in transmitted light operation or reflective operation, wherein at least one optoelectronic reading device is designed as a line detector which opposes at least one code track of the transducer plate and on which an evaluation unit is arranged, which determines the instantaneous position of the transducer plate from the scanning signals, **characterised in that** an absolute value scanning with high resolution with at least 2,048 code words per 360° revolution of the transducer plate takes place at least over a code track (42, 43), the absolute position of the transducer plate being determined by the evaluation unit, to which the signals of the absolute value scanning are fed and **in that** the signals of the absolute value scanning are evaluated such that the signals of the absolute value scanning are fed to an adder (22), and **in that** a code converter (25) together with a digital-analogue converter (27) converts the code signal coming from the adder (22) into a sinusoidal signal which is present at an output (29), and **in that** a further code converter (31) together with the digital-analogue converter (32) converts the code signal coming from the adder (22) into a cosine signal which is present at an output (34) and **in that** an incremental scanning with high resolution with at least 2,048 periods per 360° revolution of the transducer plate takes place on a single code track (1), wherein at least one line detector array (10) of optoelectronic measurement transducers (6 to 9) associated with this resolution with an average interval of a ¼ period length (19) scans this code track (1), a first optoelectronic measurement transducer supplying the signal a, a second optoelectronic measurement transducer supplying the signal b, a third optoelectronic measurement transducer supplying the inverted signal a', and a fourth optoelectronic measurement transducer supplying the inverted signal b', wherein the absolute position of the transducer plate is determined from the sinusoidal and cosine signals, and from the incremental scanning of the code track (1) and the zero signal as a reference for a complete revolution.

2. Method according to claim 1, **characterised in that** the code converters (25, 31) are programmed such that the signals (29, 34) in the form K x sine and K x cosine per complete revolution correspond to the code disc, K being an integral number.

3. Method according to either of claims 1 or 2, **characterised in that** the code converters (25, 31) are programmed such that k rectangular signals with a predetermined phase displacement are emitted at the outputs (29, 34) per disc revolution.

4. Sensor unit for transducer systems for detecting angular positions of a transducer plate, with an incremental scale and absolutely coded measuring scale, for determining the absolute position of the transducer plate, in transmitted light operation or reflective operation, wherein at least one optoelectronic reading device is designed as a line detector, which opposes at least one code track of the transducer plate, and is arranged on the one evaluation unit which determines the instantaneous position of the transducer plate from the scanning signals, **characterised in that** means for absolute value scanning with high resolution with at least 2,048 periods per 360° revolution of the transducer plate are arranged at least over one code track (42, 43), and an adder (22) is connected downstream from the absolute value scanning, from which a first code converter (25) with a digital-sinusoidal-analogue converter (27) is connected downstream, and, parallel thereto, a further code converter (31) with a digital cosine-analogue converter (32), the outputs (29, 34) of which are connected to an absolute value evaluation unit, and **in that** means for incremental scanning with high resolution with at least 2,048 periods per 360° revolution of the transducer plate are provided on a single code track (1), wherein at least one line detector array (10) of optoelectronic measurement transducers (6 to 9) associated with this resolution with an average interval of a ¼ period length (19) scans this code track (1), wherein a first optoelectronic measurement transducer supplies the signal a, a second optoelectronic measurement transducer supplies the signal b, a third optoelectronic measurement transducer supplies the inverted signal a', and a fourth optoelectronic measurement transducer supplies the inverted signal b', the evaluation unit being suitable for determining the absolute position of the transducer plate from the sinusoidal and cosine signals, and from the incremental scanning of the code track (1) and the zero signal as a reference for a complete revolution.

5. Sensor unit for transducer systems according to claim 4, **characterised in that** all same-named optoelectronic units A, B, A', B', designed as photodiodes (6, 7, 8, 9), of a measurement transducer are joined to one another to generate an interference-free aggregate signal.

6. Sensor unit for detector systems according to either of claims 4 or 5, **characterised in that** on scanning of a single code track (1) signals which are nested and dependent on one another are generated in the line detector array and are phase-displaced with respect to one another.

7. Sensor unit for transducer systems according to either of claims 5 or 6, **characterised in that** by connecting together the signals (a, a') from the photodiodes (6, 8) and the photodiodes (7,9) with the signals (b, b'), the direct components of the aggregate signals are eliminated.

8. Sensor unit for detector systems according to any one of claims 5 to 8, **characterised in that** the absolute information for the rotational position of the transducer plate is determined by scanning a special serial 11 bit-long code via the photodiode track (11) with the photodiodes (13 to 16), the photodiode track (11) generating an 11 bit-long code in order to be able to depict the 2,048 periods (19) arranged on the incremental track.

9. Sensor unit for transducer systems according to any one of claims 5 to 9, **characterised in that** precisely one absolute code word of photodiodes (13, 14, ..., 16) is generated per period (19).

10. Sensor unit for transducer systems according to any one of claims 4 to 9, **characterised in that** an additional photodiode track (12) is arranged, in which an inverted absolute value scanning is undertaken with respect to the photodiode track (11).

11. Sensor unit for transducer systems according to any one of claims 5 to 11, **characterised in that** the evaluation unit contains an adder (17) and a further adder (18) which, in each case, add the signals a and a' and the signals b and b', and the signals thus produced are then fed, in each case, to a power driver.

12. Sensor unit for transducer systems according to any one of claims 5 to 12, **characterised in that** the zero signal detection with the zero signal detector (24) takes place such that the code present at the input of the zero signal detector (24) is compared with a code filed in the zero signal detector (24), and if they match, a zero signal is generated at its output, which, owing to the coding, occurs once per revolution of the transducer plate.

13. Sensor unit for transducer systems according to any one of claims 5 to 13, **characterised in that** after the code converter (37), a conventional dual code is available at the output (40) in parallel, or after a parallel/serial conversion, is available serially.

## Revendications

1. Procédé pour détecter les positions angulaires d'un disque capteur, avec une division incrémentielle et une division de mesure à codage absolu, pour définir la position absolue du disque capteur, en fonctionnement avec lumière transmise ou avec réflexion, au moins un dispositif de lecture optoélectronique étant conçu comme un détecteur de lignes qui se trouve en face d'au moins une piste codée du disque capteur et sur lequel est disposée une unité d'évaluation qui calcule la position momentanée du disque capteur à partir des signaux de balayage, **caractérisé en ce que** par l'intermédiaire d'au moins une piste codée (42, 43), un balayage de valeurs absolues à haute définition a lieu avec au moins 2048 mots codes par révolution à 360° du disque capteur, la position absolue du disque capteur étant calculée par l'unité d'évaluation, à laquelle les signaux du balayage de valeurs absolues sont transmis, **en ce que** l'évaluation des signaux du balayage de valeurs absolues se fait de telle sorte que ces signaux sont transmis à un additionneur (22), **en ce qu'**un convertisseur de code (25) avec un convertisseur numérique-analogique (27) convertit le signal code provenant de l'additionneur (22) en un signal sinusoïdal qui est appliqué à une sortie (29), **en ce qu'**un autre convertisseur de code (31) avec le convertisseur numérique-analogique (32) convertit le signal code provenant de l'additionneur (22) en un signal cosinusoïdal qui est appliqué à une sortie (34), et **en ce que** sur une piste code unique (1), un balayage incrémentiel à haute définition a lieu avec au moins 2048 périodes par révolution à 360° du disque capteur, étant précisé qu'au moins un ensemble formant détecteur à lignes (10) de capteurs optoélectroniques de valeurs de mesure (6-9) qui est associé à cette définition balaie cette piste code (1) avec une distance de centre à centre de ¼ période (19), qu'un premier capteur optoélectronique de valeur de mesure fournit le signal a tandis qu'un deuxième capteur optoélectronique de valeur de mesure fournit le signal b, un troisième capteur optoélectronique de valeur de mesure le signal inversé a' et un quatrième capteur optoélectronique de valeur de mesure le signal inversé b', et qu'on définit à partir des signaux sinusoïdaux et cosinusoïdaux, du balayage incrémentiel de la piste code (1) et du signal nul comme référence pour un tour complet la position absolue du disque capteur.

2. Procédé selon la revendication 1, **caractérisé en ce que** les convertisseurs de code (25, 31) sont programmés pour que les signaux (29, 34) correspondent à la forme Kxsinus et Kxcosinus par tour complet du disque capteur, K étant un nombre entier.

3. Procédé selon la revendication 1 ou 2, **caractérisé en ce que** les convertisseurs de code (25, 31) sont programmés pour que pour chaque tour du disque, k signaux rectangulaires avec un déphasage prédéfini sortent au niveau des sorties (29, 34).

4. Unité de détection pour des systèmes capteurs pour détecter les positions angulaires d'un disque capteur avec une division incrémentielle et une division de mesure à codage absolu, pour définir la position absolue du disque capteur, en fonctionnement avec lumière transmise ou avec réflexion, au moins un dispositif de lecture optoélectronique étant conçu comme un détecteur de lignes qui se trouve en face d'au moins une piste codée du disque capteur et sur lequel est disposée une unité d'évaluation qui calcule la position momentanée du disque capteur à partir des signaux de balayage, **caractérisée en ce que** par l'intermédiaire d'au moins une piste codée (42, 43), il est prévu des moyens pour le balayage de valeurs absolues à haute définition avec au moins 2048 périodes par révolution à 360° du disque capteur, **en ce qu'**il est prévu en aval du balayage de valeurs absolues un additionneur (22) en aval duquel sont montés un premier convertisseur de code (25) avec un convertisseur numérique-sinus-analogique (27) et, parallèlement, un autre convertisseur de code (31) avec un convertisseur numérique-cosinus-analogique (32) dont les sorties (29, 34) sont reliées à une unité d'évaluation de valeurs absolues, et **en ce que** sur une piste code unique (1), il est prévu des moyens pour le balayage incrémentiel à haute définition avec au moins 2048 périodes par révolution à 360° du disque capteur, étant précisé qu'au moins un ensemble formant détecteur à lignes (10) de capteurs optoélectroniques de valeurs de mesure (6-9) qui est associé à cette définition balaie cette piste code (1) avec une distance de centre à centre de ¼ période (19), qu'un premier capteur optoélectronique de valeur de mesure fournit le signal a tandis qu'un deuxième capteur optoélectronique de valeur de mesure fournit le signal b, un troisième capteur optoélectronique de valeur de mesure le signal inversé a' et un quatrième capteur optoélectronique de valeur de mesure le signal inversé b', et que l'unité d'évaluation est apte à définir à partir des signaux sinusoïdaux et cosinusoïdaux, du balayage incrémentiel de la piste code (1) et du signal nul comme référence pour un tour complet la position absolue du disque capteur.

5. Unité de détection pour des systèmes capteurs selon la revendication 4, **caractérisée en ce que** toutes les unités optoélectroniques de même nom A, B, A', B', conçues comme des photodiodes (6, 7, 8, 9), d'un capteur de valeurs de mesure sont reliées entre elles pour produire un signal cumulé sans parasites.

6. Unité de détection pour des systèmes capteurs selon la revendication 4 ou 5, **caractérisée en ce que** lors du balayage d'une piste code (1) unique sont produits dans l'ensemble formant détecteur à lignes des signaux dépendant les uns des autres et imbriqués les uns dans les autres, qui sont déphasés mutuellement.

7. Unité de détection pour des systèmes capteurs selon les revendications 5 et 6, **caractérisée en ce qu'**en interconnectant les signaux (a, a') provenant des photodiodes (6, 8) et des photodiodes (7, 9) avec les signaux (b, b'), on élimine les parts identiques des signaux cumulés.

8. Unité de détection pour des systèmes capteurs selon l'une des revendications 5 à 8, **caractérisée en ce que** le calcul de l'information absolue concernant la position de rotation du disque capteur se fait grâce au balayage d'un code sériel spécial d'une longueur de 11 bits sur la piste de photodiodes (11) avec les photodiodes (13-16), ladite piste (11) générant un code d'une longueur de 11 bits afin de pouvoir représenter les 2048 périodes (19) disposées sur la piste incrémentielle.

9. Unité de détection pour des systèmes capteurs selon l'une des revendications 5 à 9, **caractérisée en ce que** pour chaque période (19), exactement un mot code absolu est généré par les photodiodes (13, 14,...,16).

10. Unité de détection pour des systèmes capteurs selon l'une des revendications 4 à 9, **caractérisée en ce qu'**il est prévu une piste de photodiodes supplémentaire (12) avec laquelle un balayage de valeurs absolues inversé est réalisé par rapport à la piste de photodiodes (11).

11. Unité de détection pour des systèmes capteurs selon l'une des revendications 5 à 11, **caractérisée en ce que** l'unité d'évaluation contient un additionneur (17) et un autre additionneur (18) qui additionnent respectivement les signaux a et a' et les signaux b et b', et les signaux formés sont ensuite transmis à des amplificateurs de puissance respectifs.

12. Unité de détection pour des systèmes capteurs selon l'une des revendications 5 à 12, **caractérisée en ce que** la reconnaissance du signal nul avec le détecteur de signal nul (24) se fait de telle sorte que le code appliqué à l'entrée dudit détecteur de signal nul (24) est comparé à un code mémorisé dans celui-ci, et s'il y a concordance, un signal nul est produit à sa sortie et apparaît une fois par tour du disque capteur, du fait du codage.

13. Unité de détection pour des systèmes capteurs selon l'une des revendications 5 à 13, **caractérisée en ce qu'**après le convertisseur de code (37), un code double habituel est disponible à la sortie (40), parallèlement ou de manière sérielle après une conversion parallèle/sérielle.
